# FASCICULE DE BREVET EUROPEEN

(11) **EP 0 626 662 B1**
(45) Date de publication et mention de la délivrance du brevet: **11.08.1999**
(21) Numéro de dépôt: 94401143.6
(22) Date de dépôt: 24.05.1994
(51) Int. Cl.: G06K 19/073

(54) **Puce de carte à puce munie d'un moyen de limitation du nombre d'authentifications**
Chip von IC Karte mit Mitteln zur Begrenzung der Anzahl von Authentifizierungen
Chip of IC card with means for limiting the number of authentifications

(30) Priorité: 26.05.1993 FR 9306312
(43) Date de publication de la demande: 30.11.1994
(73) Titulaire: GEMPLUS CARD INTERNATIONAL, 13881 Gémenos Cedex (FR)
(72) Inventeur: Kowalski, Jacek, F-75116 Paris (FR)

(56) Documents cités:
- EP-A- 0 157 303
- FR-A- 2 647 929
- PATENT ABSTRACTS OF JAPAN vol. 11, no. 12 (P-535) 13 Janvier 1987 & JP-A-61 187 075 (TOSHIBA CORP) 20 Août 1986

## Description

La présente invention a pour objet une puce de carte à puce munie d'un moyen de limitation du nombre d'authentifications par quelqu'un qui serait mal attentionné, et dont des tentatives seraient destinées à connaître un algorithme secret de chiffrement de la carte.

On connaît, dans le domaine des cartes à puce, différentes utilisations de ces cartes. Elles sont soient des cartes de type bancaire et auquel cas les indications qu'elles comportent renvoient à un fichier, ou à un registre tenu, dans un organisme bancaire, au nom du porteur de la carte. Le mécanisme d'authentification de telles cartes consiste à constater la régularité de l'appartenance de la carte au porteur de la carte, connaisseur d'un code secret de la carte. Le principe d'authentification est le suivant.

La carte est introduite dans un lecteur de carte à puce. Le lecteur envoie à destination de la carte un aléa, chiffré ou non. La carte reçoit cet aléa, et, en fonction de cet aléa, transcode un code secret de la carte et émet le code secret transcodé, ou aléa transcodé (chiffré ou non) vers le lecteur. Le lecteur connaissant l'aléa peut décoder le code secret transcodé, en connaître la réalité, et comparer ce code secret à un code d'identification que le porteur aura, par ailleurs, indiqué au moyen d'un clavier au lecteur. Des mécanismes plus complexes que celui-ci sont en pratique mis en oeuvres mais, dans leurs principes, ils sont organisés de cette façon. Normalement, après un certain nombre de tentatives sans succès, en général trois, le lecteur considère que le porteur de la carte n'est pas le porteur régulier et conserve la carte. Celle-ci est avalée : le porteur ne peut plus l'avoir à disposition.

Dans un autre domaine, notamment celui des télécommunications, le processus est encore plus simple. Etant donné qu'on ne demande même pas au porteur de la carte d'indiquer avec un clavier un quelconque code d'identification, l'aléa transcodé envoyé par la carte est directement interprété par le lecteur. Celui-ci, connaissant le numéro de série de la carte (et des algorithmes de transcodage affectés à cette série) est capable de constater que la carte a correctement calculé la transformation de l'aléa qui lui a été envoyé et que, par conséquent, c'est une carte conforme à l'usage auquel la destinait d'organisme qui les a mis en service : en général une régie de communications téléphoniques. Après reconnaissance de ces codes secrets, l'utilisation de la carte peut être lancée. Il importe donc que cette reconnaissance d'authentification ne puisse pas être simulée. Il importe donc qu'on ne puisse produire par des voies frauduleuses un aléa transcodé connaissant un aléa reçu.

Le problème réside donc dans la préservation- du transcodage, du calcul mis en oeuvre par un algorithme dans la carte. Pour différentes raisons, les calculs peuvent être effectués dans la carte avec des circuits câblés. Le déroulement de l'algorithme qui leur correspond est alors rarement remis en cause. Il importe donc qu'un fraudeur ne puisse pas, par de nombreuses tentatives, envoyer autant d'aléas qu'il le voudrait à la carte, et, en fonction de la réponse de la carte, après un certain nombre de tentatives, déduire la fonction de transfert de cet algorithme. Si une telle déduction était possible, le fraudeur aurait alors à sa disposition un moyen de falsifier une carte, au point de la transformer en un outil de consommation gratuite de services bancaires ou de communications téléphoniques.

Il n'est par ailleurs pas possible, notamment parce que les fraudes seraient pratiquées à domicile sur des lecteurs que le fraudeur fabriquerait lui-même, de soustraire les cartes à ces fraudeurs.

Il est donc nécessaire de disposer d'un moyen de limitation du nombre des authentifications exécutables avec la puce. Un tel moyen est par exemple décrit dans le document EP-A-0 157 303. Ce document divulgue un compteur comptant le nombre d'exécutions d'un programme spécifique ayant un algorithme secret. Lorsque ce nombre est supérieur à une valeur limite, le programme spécifique ne peut plus être exécuté. Néanmoins, ceci nécessite un compteur et ses moyens d'incrémentations particuliers.

La présente invention a pour objet de proposer un moyen de limitation du nombre d'authentifications exécutables avec une puce qui soit simple et fiable.

Le principe de l'invention est le suivant. Alors que la puce de la carte à puce vient d'être mise sous tension dans le lecteur, on prévoit d'autoriser une première authentification, en envoyant un code aléatoire caractéristique, toujours le même, au début de la session à la carte. Par exemple, ce code aléatoire caractéristique n'est pas aléatoire du tout, mais comporte par exemple une succession de bits tous identiques. Par exemple tous ces bits sont des uns (ou éventuellement tous des zéros). Le transcodage de ce code aléatoire caractéristique connu permet à la carte de renvoyer un aléa transcodé connu. Il est tout à fait sans inconvénient de laisser le fraudeur détecter cet aléa transcodé connu : c'est toujours le même.

Par la suite, cependant, au cours de l'utilisation de la carte, on autorisera une mise en oeuvre réelle de l'authentification sous certaines conditions. En particulier on n'autorisera l'envoi au lecteur d'un aléa transcodé qui correspond à un autre aléa reçu, uniquement si l'état d'un registre, dans un exemple un compteur d'unités, a été transformé au cours de la session qui a précédée la seconde authentification.

Dans le domaine des cartes de type téléphonique, après comptage d'unités, on provoque ainsi une opération d'authentification (avec envoi d'aléa, transcodage d'aléa, et ré-émission de l'aléa transcodé) à chaque fois qu'une unité aura été consommée. Ceci est autorisé par les circuits de la puce, selon l'invention, du seul fait que le compteur d'unités aura changé d'état. Bien évidemment, un fraudeur qui s'arrangera pour empêcher le décomptage des unités par le compteur ne pourra pas aboutir à ce résultat. Alors qu'il aura réussi à passer la première authentification, le fraudeur sera donc incapable de laisser passer la deuxième. Il sera incapable de faire passer une série d'aléas (différents de l'aléa caractéristique) et de démonter l'algorithme de transcodage mis en oeuvre dans la puce. En définitive, avec une carte possédant une centaine d'unités, le nombre d'essais possibles est limité à cent. C'est insuffisant pour déduire la fonction de transfert de l'algorithme par fonction inverse.

L'invention propose donc une puce de carte à puce munie d'un moyen de limitation du nombre d'authentifications exécutables avec cette puce, telle que définie dans la revendication 1.

Bien que l'invention soit décrite ici avec un ensemble de circuits, il est possible d'en réaliser une variante sous forme logicielle, notamment pour les applications de type bancaire. Le terme de moyen s'entend donc comme couvrant ces deux possibilités.

L'invention sera mieux comprise à la lecture de la description qui suit à l'examen des figures qui l'accompagnent. Celles-ci ne sont données qu'à titre indicatif et nullement limitatif de l'invention. Les figures montrent :
- figure 1 : un exemple d'une puce protégée selon le mécanisme de l'invention ;
- figure 2 : une représentation schématique d'un circuit logique utilisé pour mettre en oeuvre l'invention ;
- figure 3 : des chronogrammes de signaux mis en oeuvre dans le circuit de la figure 2.

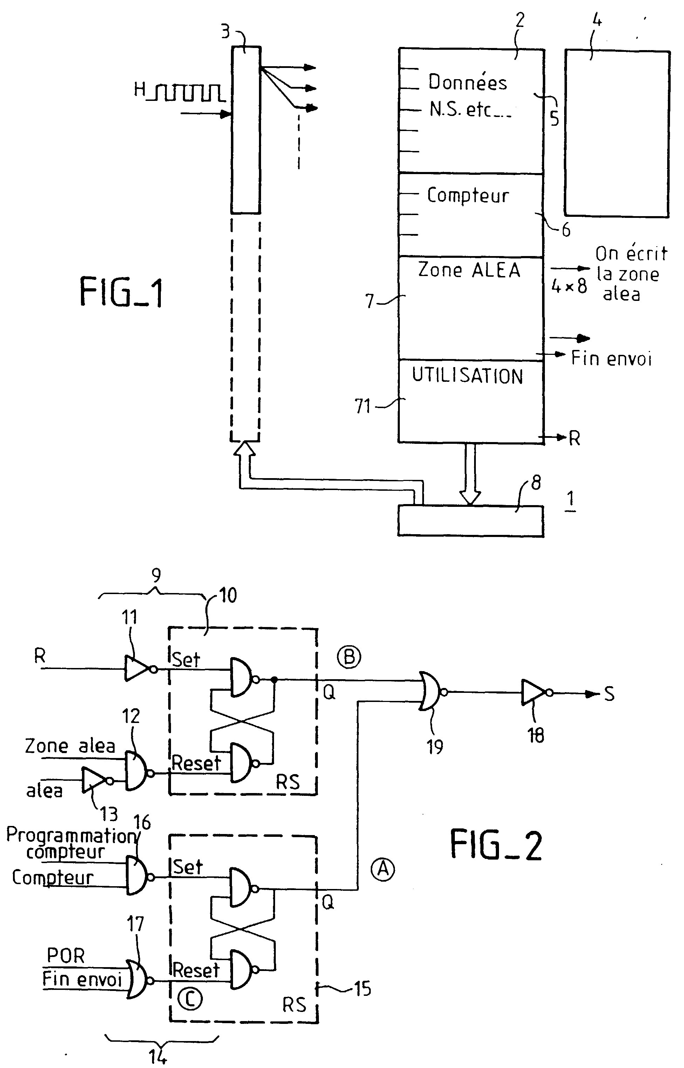

La figure 1 montre un exemple d'une puce 1 munie du circuit de limitation de l'invention. La puce 1 comporte une mémoire 2, un circuit d'adressage 3 de la mémoire, et un circuit câblé 4, ou éventuellement programmable, pour mettre en oeuvre d'une manière complète une utilisation particulière de la carte : mode bancaire, mode de pré-paiement, ou autre. La mémoire 2 et les circuits 3 et 4 sont reliés entre eux de manière habituelle. Si le circuit 4 n'est pas uniquement un circuit câblé, il comporte dans son principe un microprocesseur exécutant des instructions. Ces instructions peuvent en particulier être stockées dans la mémoire 2. L'invention s'applique plus particulièrement aux puces munies d'une mémoire 2 non volatile à accès série : le circuit d'adressage 3 comporte dans son principe un compteur relié à une horloge débitant un signal d'horloge H. Les sorties du compteur constituent des signaux d'adresse utilisables pour sélectionner les uns après les autres des mots ou des cellules mémoires de la mémoire 2.

Ces mots mémoires peuvent être rangés en plusieurs zones contiguës. Par exemple, dans une première zone 5, des données spécifiques à la puce et/ou à la carte, telles que notamment le numéro de série de la carte, peuvent être stockées. Dans une zone consécutive 6, l'état d'un compteur (d'unités pré-payées ou consommées) peut être enregistré. Dans une zone suivante 7, on peut stocker un aléa, soit sous sa forme reçue avant sa transformation, soit sous une forme transcodée.

L'invention est décrite ici dans une application particulière connue où le circuit d'adressage 3 provoque en même temps que l'adressage l'exécution, par le circuit câblé 4, d'opérations de traitement de signaux, notamment le transcodage. Par exemple, à chaque impulsion d'horloge, alors que le circuit 3 sélectionne une nouvelle adresse dans la mémoire 2, le circuit câblé 4 est prévu pour transcoder des signaux qui sont à sa disposition. Ce transcodage ne correspond au transcodage de l'aléa reçu que lorsque le circuit 3 pointe lui-même sur la première cellule mémoire de la zone aléa 7.

Une autre particularité du circuit 4, de type connu, est que, lorsque la première cellule mémoire de la zone 7 est pointée, il y écrit le résultat de transcodage qu'il vient d'exécuter sur un premier bit (0 ou 1) d'un aléa qu'il vient de recevoir. Dans l'application décrite, il est prévu d'envoyer ainsi 32 bits aléatoires successivement. Au moment où, dans cette application, le circuit 3 pointe la 29ème cellule de la zone 7, non seulement le circuit 4 transcode l'aléa reçu, l'écrit à la 29ème place, mais également l'envoie sur un circuit d'entrée/sortie 8 en communication avec le lecteur (non représenté). En pratique, on écrit d'abord 32 bit d'aléa transcodés, puis on refait 32 opérations de calcul avec l'aléa transcodé stocké (et non plus avec l'aléa externe reçu). C'est dans la dernière partie des 32 bits ainsi recalculés qu'on sort les quatre derniers bits à titre de résultat. Lorsque le 32ème bit d'aléa est reçu, transcodé puis réémis, le lecteur en communication avec la carte 1 peut, connaissant le numéro de série de la carte (lu au moment de la lecture de la zone 2) prélever dans une table un mode de transcodage du circuit 4 (affecté à cette série de cartes), et vérifier que les quatre derniers bits qu'il vient de recevoir correspondent à ceux qu'il aurait dû recevoir. En cas de succès, l'utilisation de la carte est permise et le circuit 4, notamment lorsqu'il est programmable, peut mettre en oeuvre des instructions d'utilisation stockées dans une zone 71 consécutive à la zone 7 dans la mémoire 2. Si la lecture de la carte n'est pas série, et si l'adressage n'est pas fait de cette façon, on s'arrange pour avoir un protocole de démarrage du même type. Ce protocole comporte notamment l'envoi d'un aléa caractéristique.

Dans l'invention, on peut prévoir que le premier code aléatoire envoyé à la carte, n'est ainsi pas aléatoire du tout mais, au contraire, tout à fait attendu. Par exemple, il comporte une série de 32 bits valant 1. On peut choisir 32 bits valant 0 ou même une configuration différente, du moment que dans le circuit 4 on va pouvoir mettre en place un circuit détecteur de l'apparition de cette séquence aléatoire reçue attendue. Dans l'exemple représenté, cette détection est d'autant plus facile que tous les bits sont de même nature. A l'envoi de ce code aléatoire caractéristique correspond une authentification dite ci-après pseudo-authentification avec ré-émission par la carte d'un code aléatoire transcodé toujours le même. On verra par la suite que le code transcodé réémis peut aussi être différent d'une fois sur l'autre. Une fois que cette pseudo-authentification a été mise en oeuvre, on peut provoquer, selon le mode d'utilisation de la carte ou d'une manière systématique, l'évolution d'un compteur dont l'état est mémorisé dans la zone 6. Après la pseudo-authentification ou, par ailleurs, si cette pseudo-authentification n'a pas été tentée, les authentifications ultérieures ou autres ne sont autorisées que si ce compteur a changé d'état. On choisit un compteur dont le nombre d'unités est limité. Par exemple, on choisit de préférence un compteur d'unités prépayées. De ce fait, il devient alors impossible à un fraudeur de simuler de très nombreuses fois le fonctionnement d'un lecteur et d'envoyer des aléas successifs si le compteur n'a pas été défalqué. Au delà d'un certain nombre d'unités, le compteur est hors service et la carte ne répond plus -aux sollicitations. En variante le compteur peut être remplacé par un registre associé à un moyen de détecter le changement d'état du registre. Dans ce cas, ou bien le contenu du registre intervient dans le transcodage ou bien le nombre de changements d'état du registre est limité d'une manière ou d'une autre.

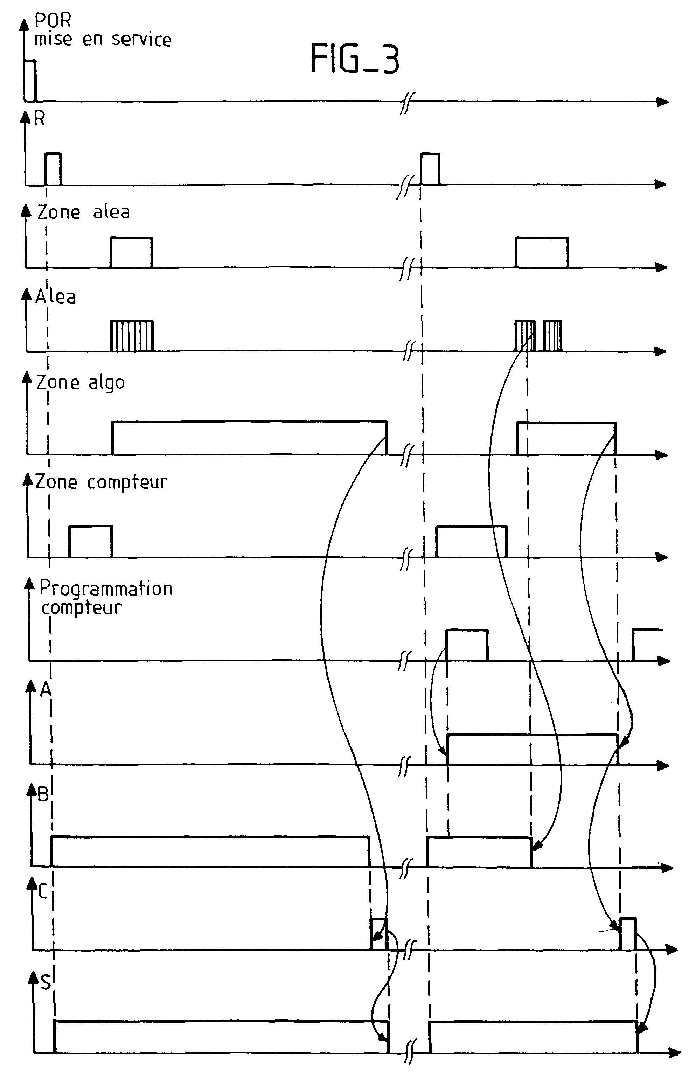

Dans un exemple, figure 2, le circuit de limitation du nombre d'authentifications de la puce de l'invention comporte un premier circuit logique 9 pour détecter, à une mise sous tension de la puce, la présentation d'une succession de bits caractéristiques sur une entrée de cette puce. Par exemple, le circuit 9 comporte une porte RS 10 dont l'entrée Set reçoit un signal R fourni par un inverseur 11 et dont l'entrée Reset reçoit un signal fourni par une porte NAND 12. La porte NAND 12 reçoit un signal dit "zone aléa" passant à l'état actif (à l'état 1 en logique positive) dès que la sortie du circuit d'adressage 3 pointe la première cellule mémoire de la zone 7. La porte NAND 12 reçoit également, au travers d'un inverseur 13, un signal dit "aléa" correspondant aux 32 bits aléatoires reçus par la carte. Dans un premier cas, les 32 bits de l'aléa valent 1. En conséquence, la sortie de la porte NAND 12 est portée à 1 pendant l'envoi de ce pseudo-aléa. Par contre, par la suite, lorsqu'un véritable aléa sera envoyé, il comportera nécessairement un bit 0 sur les 32 bits. En conséquence, un signal B, visible sur la figure 3, disponible en sortie de la bascule 10, maintenu à l'état un pendant la première phase, chutera dès l'apparition de ce premier bit 0. D'une manière duale, on peut concevoir un fonctionnement avec des zéros en enlevant l'inverseur 13.

Le signal R appliqué à l'entrée de l'inverseur 11 est un signal qui devient actif dès qu'on lit la première cellule de la mémoire 2 située en zone 5. R devient donc actif soit après la mise sous tension soit après une remise à zéro d'adressage. En conséquence, au moment du démarrage au moins pendant la pseudo authentification, le signal B vaut 1.

Par la suite, lorsque le circuit 4 détecte la fin de la mise en oeuvre de l'algorithme et de l'envoi de l'aléa transcodé, il émet un signal de fin d'envoi à destination d'un deuxième circuit logique 14 comportant lui également une bascule RS 15. La bascule RS 15 reçoit sur son entrée Set un signal délivré par une porte NAND 16, et sur son entrée Reset un signal délivré par une porte NOR 17. La porte 16 reçoit en entrée un signal représentatif de l'adressage du début de la zone compteur 6, ainsi qu'un signal signalant la programmation d'une unité dans ce compteur. La porte 17 reçoit en entrée un signal POR de remise à zéro au moment de la mise à zéro ou de la mise sous tension de la puce, ainsi que le signal de fin d'envoi (de fin d'émission de l'aléa transcodé à destination du lecteur). En pratique, ce signal de fin d'envoi peut être déclenché par un accès à une première cellule mémoire de la zone 71 d'utilisation de la mémoire 2. Il peut également être un signal passant au travers d'un monostable ou même tout simplement le signal d'horloge qui correspond à la sélection de la première zone mémoire de la zone 71. Cette impulsion, provoque la remise à zéro de la bascule 15 et en conséquence le retour à 0 d'un signal S disponible en sortie d'un inverseur 18 connecté en sortie d'une porte NAND 19 qui reçoit en entrée les sorties Q respectivement des bascules RS 10 et 15.

Le signal S est utilisé dans l'invention pour valider toutes les authentifications. Par exemple, il autorise l'émission aussi bien du pseudo aléa transcodé lors de la première passe que les émissions des aléas successifs transcodés, s'il est à l'état 1.

Par la suite, confer figure 3, on constate que le signal S est porté à l'état 1 au moment où on effectue une programmation dans le compteur. En effet, dans ce cas, un signal A, en sortie Q de la porte 15, est porté à un état 1, ce qui porte par ailleurs le signal S à un. état 1 également. Le signal S est porté à un état 0 à chaque fois qu'une authentification a été validée : à chaque fois que l'aléa transcodé est émis.

On observe également que si une programmation du compteur ne s'est pas produite, il est possible que le signal S monte temporairement à 1 du fait de l'adressage de la zone d'aléa ainsi que de la réception conjointe d'un certain nombre de bits d'aléa à l'état 1. Par contre, dès la première réception d'un bit d'aléa à l'état 0, le signal B redescend à 0. Il entraîne avec lui la chute du signal S. Celui-ci n'est maintenu à 1 dans la partie droite de la figure 3 que par la présence du signal A. En pratique, la bascule 15, sert à mémoriser, d'une période d'authentification à une autre, le fait qu'une programmation du compteur s'est produite. Plutôt qu'une programmation compteur, on peut par ailleurs envisager tout autre phénomène cyclique. Dans le cas où on a affaire à une mémoire 2 de type EPROM ou EEPROM on détectera cette programmation à partir des potentiels spécifiques à cette technologie mis en oeuvre pour l'effectuer.

Le circuit de la figure 2 peut être réalisé de bien d'autres façons. Normalement, ce circuit est incorporé dans le circuit 4. La version qui est indiquée ici est spécialement adaptée, parce que simple, à la gestion des cartes de type à unités prépayées.

Dans une variante particulièrement intéressante, on choisit un fonctionnement alternatif. Soit, pour diverses raisons, on ne souhaite pas décompter les authentifications, et dans ce cas on envoie à la carte toujours l'aléa caractéristique correspondant à la pseudo-authentification. On autorise alors le fonctionnement de la carte si cette pseudo-authentification est correcte. Soit on souhaite décompter directement les authentifications et ne pas passer par une étape préliminaire de pseudo-authentification. L'invention est alors remarquable en ce qu'elle comporte dans le premier circuit câblé 10, un circuit pour détecter la nature de l'aléa reçu, et pour savoir si cet aléa est un aléa nécessitant un décomptage des utilisations ou non. Un tel circuit détecteur, dont la sortie est par exemple connectée à l'entrée de l'inverseur 13, est par exemple constitué par un décodeur branché en parallèle d'un registre à décalage qui reçoit l'aléa. Dès que l'état de ce registre à décalage correspond à l'état caractéristique, la sortie du décodeur devient active. Si l'aléa est différent de l'aléa caractéristique, la sortie du décodeur ne devient pas active.

Dans le cas de la variante cependant, pour éviter que la réponse de la puce, à un aléa caractéristique toujours le même, soit toujours la même, on peut transcoder l'aléa dans la carte selon un algorithme qui évolue en fonction de l'état d'un registre variable, d'un compteur variable (notamment le compteur d'unités), de la puce. Ainsi un aléa à transcoder subira des modifications liées à des parties constantes de l'algorithme (ces parties constantes dépendant par exemple de la série de fabrication de la carte dont le lecteur est informé par une lecture préalable du numéro de série de la carte), et liées à des parties paramétrables de l'algorithme (les paramètres utilisés sont par exemple le résultat du compteur d'unités, ou plutôt d'un compteur de nombre d'opérations, qui est par ailleurs envoyé également au lecteur). Dans ces conditions, le lecteur envoie l'aléa, et reçoit en retour 1) une information de numéro de série, 2) la valeur du paramètre variable, et 3) l'aléa transcodé. Ce dernier est donc différent à chaque opération puisqu'un compteur d'opérations aura changé d'état entre-temps. Cet aléa transcodé n'est donc pas falsifiable ni détectable par le fraudeur. En effet dans ce cas, le fraudeur ne dispose que de l'aléa pseudo-aléatoire pour faire autant d'essais qu'il le veut.

S'il veut essayer un autre aléa, il y aura automatiquement décompte d'unités dans le compteur d'unités. Dans ce cas, en effet, le circuit 4 est tel qu'il n'autorise une authentification (à partir d'un aléa différent de l'aléa caractéristique) que si au préalable une unité a été décomptée. En pratique le décomptage d'unités est dans ce cas piloté par la sortie du circuit 9 qui détecte la présence ou non de l'aléa caractéristique.

## Revendications

1. Puce de carte à puce, notamment d'une carte téléphonique, munie d'un moyen de limitation du nombre d'authentifications exécutables avec cette puce, et d'un moyen pour exécuter une authentification consistant à transcoder à l'aide d'un algorithme secret une succession de bits, ou aléa, reçu d'un lecteur de carte à puce sur une entrée de la puce et à ré-émettre ledit aléa transcodé vers le lecteur, ledit moyen de limitation comprenant:
- un registre dont le nombre de changement d'état est limité, et dont l'état est représentatif du degré d'utilisation de la carte et évolue en cours d'utilisation de la carte,
- un premier circuit câblé (10) logique pour autoriser, à une mise sous tension de la puce ou après un ordre de remise à zéro, l'exécution d'une première authentification, dite pseudo-identification, correspondant à un aléa caractéristique, toujours le même,
- un deuxième circuit câblé (15) logique pour détecter un changement d'état du registre en cours d'utilisation de la carte,
- et un troisième circuit câblé (18-19), dit cicuit de validation, pour autoriser l'exécution ultérieure d'une authentification correspondant à un aléa différent de l'aléa caractéristique, uniquement si le deuxième circuit indique que le registre a changé d'état.

2. Puce selon la revendication 1, caractérisée en ce que le registre est un compteur (6) muni de cellules mémoires non volatiles.

3. Puce selon l'une des revendications 1 à 2, caractérisée en ce que le premier et le deuxième circuit câblé logique comportent une bascule RS, et en ce que le circuit de validation comporte une porte OU ou NON OU connectée en sortie de ces deux bascules.

4. Puce selon la revendication 3, caractérisée en ce que les bits de l'aléa caractéristique sont identiques les uns aux autres, de préférence ce sont des uns, et en ce que le premier circuit logique comporte une porte ET recevant ces bits ("aléa") et un signal ("zone aléa") de réception de ces bits, cette porte ET étant connectée en entrée de la bascule RS du deuxième circuit logique.

5. Puce selon l'une des revendications 1 à 4, caractérisée en ce que le registre est un compteur d'unités prépayées, dont le nombre est limité, d'une carte téléphonique à puce.

## Patentansprüche

1. Chip einer Chipkarte, insbesondere einer Telefonkarte, ausgestattet mit einem Mittel zur Begrenzung der Zahl der mit dem Chip ausführbaren Authentisierungen, und mit einem Mittel zur Ausführung einer Authentisierung, die darin besteht eine Folge von Bits bzw. einen Zufallswert, welcher aus einem Chipkarten-Leser auf einem Eingang des Chips empfangen wurde, mit Hilfe eines Geheimcodes umzukodieren, und den umkondierten Zufallswert wieder an den Leser auszugeben, wobei das Mittel zur Begrenzung umfaßt:
- ein Register, bei welchem die Zahl der Zustandsveränderungen begrenzt ist, und bei welchem der Zustand repräsentativ ist für den Grad der Verwendung der Karte und sich im Verlauf der Verwendung der Karte entwickelt,
- eine erste festverdrahtete Logikschaltung (10), um bei dem Anlegen einer Spannung an den Chip oder nach einem Rücksetzbefehl die Ausführung einer ersten Authentisierung zu gestatten, welche als Pseudo-Identifikation bezeichnet wird, welche einem charakteristischen Zufallswert, welcher immer der Gleiche ist, entspricht,
- eine zweite festverdrahtete Logikschaltung (15) zur Erfassung einer Zustandsveränderung des Registers im Verlauf der Verwendung der Karte,
- und eine dritte festverdrahtete Schaltung (18-19), welche als Validierungsschaltung bezeichnet wird, zur Gestattung der späteren Ausführung einer Authentisierung, welche einem anderen Zufallswert als dem charakteristischen Zufallswert entspricht, einzig wenn die zweite Schaltung anzeigt, daß das Register den Zustand geändert hat.

2. Chip nach Anspruch 1, dadurch gekennzeichnet, daß das Register ein Zähler (6) ist, der ausgestattet ist mit nichtflüchtigen Speicherzellen.

3. Chip nach einem der Ansprüche 1 bis 2, dadurch gekennzeichnet, daß die erste und zweite festverdrahtete Logikschaltung eine Kippschaltung RS umfassen, und daß die Validierungsschaltung einen ODER- oder Nicht-ODER-Anschluß trägt, angeschlossen am Ausgang der zwei Kippschaltungen.

4. Chip nach Anspruch 3, dadurch gekennzeichnet, daß die Bits des charakteristischen Zufallswerts zueinander gleich sind, vorzugsweise sind es Einsen, und daß die erste Logikschaltung einen UND-Anschluß trägt, welcher diese Bits ("Zufallswert") und ein Signal ("Zufallszone") des Empfangs dieser Bits empfängt, wobei der UND-Anschluß am Eingang der Kippschaltung RS der zweiten Logikschaltung angeschlossen ist.

5. Chip nach einem der Ansprüche 1 bis 4, dadurch gekennzeichnet, daß das Register ein Zähler vorbezahlter Einheiten, deren Zahl begrenzt ist, einer Telefon-Chipkarte ist.

## Claims

1. A chip card, in particular a telephone card, provided with a means for limiting the number of authentications that can be run with this chip and a means for running an authentication routine consisting in transcoding a series of bits or random number with the aid of a secret code received from a chip card reader on an input of the chip and in transmitting said transcoded random number back to the reader, said limiting means comprising:
- a register, the number of changes of state of which is limited, the state thereof being representative of the degree of usage of the card and changing as the card is used,
- a first cabled logic circuit (10) for authorising a first authentication to be run when voltage is applied to the chip or after a reset to zero command, said pseudo-identification, corresponding to a characteristic random number, being always the same,
- a second cabled logic circuit (15) for detecting a change of state of the register during usage of the card,
- and a third cabled circuit (18-19), referred to as a validation circuit, to authorise subsequent execution of an authentication corresponding to a different random number from the characteristic random number only if the second circuit indicates that the state of the register has changed.

2. A chip as claimed in claim 1, characterised in that the register is a counter (6) provided with read-only memory cells.

3. A chip as claimed in one of claims 1 to 2, characterised in that the first and the second cabled logic circuit have a flip-flop RS and in that the validation circuit has an OR or NOR gate connected at the output of these two flip-flops.

4. A chip as claimed in claim 3, characterised in that the bits of the characteristic random number are identical to one another, preferably being one, and in that the first logic circuit has an AND gate receiving these bits ("random number") and a receiving signal ("random zone") for these bits, this AND gate being connected at the input of the flip-flop RS of the second logic circuit.

5. A chip as claimed in one of claims 1 to 4, characterised in that the register is a counter for prepaid units, the number of which is limited, of a telephone chip card.
